# EUROPÄISCHE PATENTSCHRIFT

(11) **EP 3 204 889 B1**
(45) Veröffentlichungstag und Bekanntmachung des Hinweises auf die Patenterteilung: **31.03.2021**
(21) Anmeldenummer: 15778259.0
(22) Anmeldetag: 05.10.2015
(51) Int. Cl.: G06K 9/00

(54) **VERFAHREN FÜR EIN KRAFTFAHRZEUG MIT EINER KAMERA, VORRICHTUNG UND SYSTEM**
METHOD FOR A MOTOR VEHICLE PROVIDED WITH A CAMERA, DEVICE AND SYSTEM
PROCÉDÉ POUR UN VÉHICULE AUTOMOBILE ÉQUIPÉ D'UNE CAMÉRA, DISPOSITIF ET SYSTÈME

(30) Priorität: 06.10.2014 DE 102014220199
(43) Veröffentlichungstag der Anmeldung: 16.08.2017
(73) Patentinhaber: Continental Automotive GmbH, 30165 Hannover (DE)
(72) Erfinder: BELHOULA, Abdelkarim, 35614 Asslar (DE)
(74) Vertreter: Continental Corporation
(86) Internationale Anmeldenummer: PCT/EP2015/072952
(87) Internationale Veröffentlichungsnummer: WO 2016/055416

(56) Entgegenhaltungen:
- DE-A1- 10 245 335
- DE-A1-102004 047 081
- US-A1- 2012 203 452

## Beschreibung

Die Erfindung betrifft ein Verfahren für ein Kraftfahrzeug, insbesondere zur Ermittlung von Fahrspuren mittels einer Kamera. Die Erfindung betrifft weiterhin eine Vorrichtung, die dazu ausgebildet ist, das Verfahren durchzuführen, und ein System, das die Vorrichtung aufweist.

Navigationssysteme können Daten über die Topologie der Straßen und größerer Kreuzungen aufweisen. Die Topologie umfasst insbesondere die Abbiegerichtung, die für eine Fahrspur vorgesehen ist, also beispielsweise eine Linksabbiegerspur, eine Geradeausspur oder eine Rechtsabbiegerspur. Diese Informationen können dem Fahrer eines Kraftfahrzeugs in unmittelbarer Nähe solcher Kreuzungen dargestellt werden. Die Darstellung ist herkömmlich unabhängig von den tatsächlich vorhandenen Fahrspuren und der eigenen Fahrzeugposition.

Die USA Patentanmeldung US 2012/203452 A1 beschreibt ein Verfahren zum Betreiben eines auf einer Fahrbahn fahrenden Kraftfahrzeugs.

Die deutsche Patentanmeldung DE 102 45 335 A1 beschreibt eine Navigationsvorrichtung zur Führung eines Fahrzeugs in einem Verkehrswegenetz, mit einer Recheneinheit zur Berechnung einer Fahrtroute zu einem Fahrziel, mit Mitteln zur Erfassung eines vor dem Fahrzeug sich bewegenden Objekts und mit Mitteln zur Ausgabe von Fahrhinweisen an den Fahrer zur Führung entlang der Fahrtroute, wobei die Fahrhinweise ein Fahrmanöver in Bezug aus das sich bewegende Objekt beschreiben.

Die deutsche Patentanmeldung DE 10 2004 047081 A1 beschreibt ein System mit einer Videoerfassungsanordnung (12) und einem Bildprozessor (20) zum Erfassen anderer Fahrzeuge. Der Bildprozessor ist dazu eingerichtet, definierte Zustände der Signaleinrichtungen anderer Fahrzeuge zu erfassen. Es ist wünschenswert, ein Verfahren für ein Kraftfahrzeug mit einer Kamera anzugeben, das eine genaue Ermittlung einer Umgebung eines Kraftfahrzeugs ermöglicht. Zudem ist es wünschenswert, eine Vorrichtung für ein Kraftfahrzeug anzugeben sowie ein System für ein Kraftfahrzeug, die beziehungsweise das ein verlässliches Ermitteln der Umgebung des Kraftfahrzeugs ermöglicht.

Die Erfindung zeichnet sich aus durch ein Verfahren für ein Kraftfahrzeug mit einer Kamera sowie eine korrespondierende Vorrichtung, die zum Ausführen des Verfahrens ausgebildet ist.

Gemäß zumindest einer Ausführungsform der Erfindung wird ein Bild der Kamera bereitgestellt, das eine Umgebung des Kraftfahrzeugs abbildet. Mindestens eine Fahrzeugkolonne wird in dem Bild ermittelt. Mindestens eine Fahrspur wird in Abhängigkeit von der ermittelten mindestens einen Fahrzeugkolonne ermittelt. Ein Zustand von Fahrtrichtungsanzeigern in der mindestens einen Fahrzeugkolonne wird in dem Bild ermittelt. Eine Spurtopologie, die Informationen über eine Fahrtrichtung der mindestens einen Fahrspur (108) als Rechtsabbiegespur, Geradeausspur oder Linksabbiegespur umfasst, für die ermittelte mindestens eine Fahrspur wird in Abhängigkeit von dem Zustand der Fahrtrichtungsanzeiger in der mindestens einen Fahrzeugkolonne ermittelt.

Mittels der Kamera wird das Bild der Umgebung des Kraftfahrzeugs erfasst. Mittels Bildauswertealgorithmen wird in dem Bild die Fahrzeugkolonne ermittelt. Die Fahrzeugkolonne weist eine Mehrzahl von hintereinander angeordneten Kraftfahrzeugen auf. Beispielsweise wird eine Mehrzahl von zeitlich aufeinander folgenden Bildern bereitgestellt und für die nachfolgenden Verfahrensschritte verwendet. Insbesondere wird ein Videosignal der Kamera verwendet.

Mehrere Fahrzeugkolonnen können nebeneinander in dem Bild erkannt werden. In Abhängigkeit der Anzahl der Fahrzeugkolonnen wird eine Anzahl von Fahrspuren ermittelt. Wird eine einzige Fahrzeugkolonne in dem Bild ermittelt, wird ermittelt, dass eine einzige Fahrspur in der Umgebung vorhanden ist. Werden beispielsweise zwei Fahrzeugkolonnen in dem Bild ermittelt, wird ermittelt, dass zwei Fahrspuren in der Umgebung vorhanden sind. Um die Spurtopologie der ermittelten Fahrspuren zu ermitteln, wird mindestens ein Fahrtrichtungsanzeiger (so genannter Blinker) ausgewertet, der in dem Bild abgebildet ist. Im Betrieb werden gemäß Ausführungsformen die Zustände einer Mehrzahl von Fahrtrichtungsanzeigern ausgewertet. Der Zustand kann ein Linksblinken, ein Rechtsblinken oder kein Blinken umfassen. Wird für eine Fahrzeugkolonne ermittelt, dass ein vorgegebener Anteil der Kraftfahrzeuge der Fahrzeugkolonne rechts blinkt, wird die Spurtopologie der Fahrspuren als Rechtsabbiegerspur ermittelt. Wird ein vorgegebener Anteil an Kraftfahrzeugen der Fahrzeugkolonne ermittelt, die links blinken, wird die Spurtopologie der Fahrspur als Linksabbiegerspur ermittelt. Wird kein Blinken ermittelt oder ist der Anteil an blinkenden Fahrzeugen niedriger als der vorgegebene Anteil, wird die Spurtopologie der Fahrspur als Geradeausspur ermittelt. Gemäß weiteren Ausführungsformen sind mehrere Abstufungen möglich. Beispielsweise ist ein erster

Wert für den Anteil vorgegeben, bei dessen Unterschreiten auf eine Geradeausspur geschlossen wird. Ein zweiter Anteil ist vorgegeben. Wird ein Anteil an blinkenden Fahrzeugen ermittelt, der zwischen dem ersten und dem zweiten vorgegebenen Anteil liegt, wird auf eine Spurtopologie geschlossen, die sowohl ein Geradeausfahren als auch ein Abbiegen vorsieht. Wird der zweite vorgegebene Anteil überschritten, wird auf eine Abbiegespur geschlossen.

Mittels des Verfahrens ist es möglich, die Anzahl der Fahrspuren und die Spurtopologie in der Umgebung des Kraftfahrzeugs zu ermitteln. Hierbei kann auf zusätzliche Informationen verzichtet werden, die beispielsweise aus einer Datenbank eines Navigationssystems bezogen werden. Zudem ist die Ermittlung der Fahrspuren möglich, auch wenn eine Fahrbahnmarkierung auf dem Bild der Umgebung nicht zu erkennen ist, beispielsweise weil die Fahrbahnmarkierung durch dichten Verkehr verdeckt ist. Zudem wird die Fahrspur aktuell ermittelt, und nicht auf Grundlage von Daten, die veraltet sein können. Beispielsweise wenn eine Fahrspur gesperrt ist oder eine Fahrspur nur unregelmäßig für ein Befahren geöffnet ist, wird dies durch das Verfahren verlässlich ermittelt. Eine fehlerhafte Navigationsanweisung aufgrund von nicht zutreffenden Daten über die Fahrspuren in der Umgebung wird so vermieden.

Gemäß weiteren Ausführungsformen wird eine Kamerainformation der Kamera bereitgestellt. Eine Position des Kraftfahrzeugs relativ zu der mindestens einen ermittelten Fahrspur wird in Abhängigkeit von der Kamerainformation ermittelt. Die Kamerainformation umfasst insbesondere Kalibrierungsinformationen der Kamera. Die Kamerainformation umfasst beispielsweise Informationen über die Optik der Kamera, relative Ausrichtung der Kamera zum Kraftfahrzeug und/oder relative Ausrichtung der Kamera zum Kraftfahrzeug. Diese Kamerainformation wird bei der Auswertung des Bilds der Kamera berücksichtigt. Aus Bildverzerrungen oder einem Versatz der erkannten Fahrspur oder weiteren Bildbearbeitungsalgorithmen ist es möglich, zu ermitteln auf welcher Fahrspur sich das Kraftfahrzeug befindet. Bei mehreren Fahrspuren ist es so möglich, zu ermitteln ob sich das Kraftfahrzeug auf der rechten Fahrspur, einer mittleren Fahrspur oder der linken Fahrspur befindet.

Die Information über die Position des Kraftfahrzeugs wird beispielsweise bei der Erstellung von Navigationsanweisungen für eine Routenführung eines Navigationsgeräts berücksichtigt. Beispielsweise ist es so möglich präzise Navigationsanweisungen auszugeben. Gemäß Ausführungsformen wird eine Routeninformation einer geplanten Route für das Kraftfahrzeug bereitgestellt. Eine bevorzugte Fahrspur für das Kraftfahrzeug wird in Abhängigkeit von der Routeninformationen und in Abhängigkeit der ermittelten Spurtopologie ermittelt. Umfasst die Routeninformation beispielsweise, dass an der nächsten Kreuzung links abgebogen werden muss, ist es möglich, aus der ermittelten Spurtopologie die Fahrspuren zu filtern, die Linksabbiegerspuren sind. Dabei wird gemäß Ausführungsformen die ermittelte Position des Kraftfahrzeugs berücksichtigt. Wird beispielsweise ermittelt, dass das Kraftfahrzeug auf der ganz rechten Fahrspur ist, und das es mehrere Linksabbiegerspuren gibt, wird als bevorzugte Fahrspur die Linksabbiegerspur gewählt, die am weitesten rechts angeordnet ist. Somit muss das Kraftfahrzeug möglichst wenig Spurwechsel vollziehen. Zudem kann die Navigationsanweisung die exakte Anzahl der Spurwechsel ausgeben. Dadurch, dass die Position des Kraftfahrzeugs bekannt ist, ist bekannt, auf welcher Fahrspur in der Umgebung des Kraftfahrzeugs sich das Kraftfahrzeug befindet.

Gemäß weiteren Ausführungsformen wird eine Sollspurtopologie aus einer Datenbank bereitgestellt. Beispielsweise wird die Sollspurtopologie aus den Daten eines Navigationssystems bereitgestellt. Die Spurtopologie wird aus dem Bild der Kamera in Abhängigkeit von der Sollspurtopologie ermittelt. Somit ist es möglich, die ermittelte Spurtopologie durch die Sollspurtopologie zu plausibilisieren. Zudem ist es möglich, die Sollspurtopologie durch die ermittelte Spurtopologie zu aktualisieren.

Gemäß weiteren Ausführungsformen wird die Lage einer Fahrbahnmarkierung in der Umgebung ermittelt. Die mindestens eine Fahrspur wird in Abhängigkeit von der Lage der Fahrbahnmarkierung ermittelt. Insbesondere, wenn die Fahrbahnmarkierung teilweise sichtbar ist und nur teilweise überdeckt ist, ist es möglich, die ermittelte Fahrspur mittels der ermittelten Lage der Fahrbahnmarkierung zu plausibilisieren. Somit ist es auch möglich, die Genauigkeit der ermittelten Fahrspur zu erhöhen. Insbesondere wird die Lage der Fahrbahnmarkierung dann zur Ermittlung der Fahrspur herangezogen, wenn die Fahrspur in dem Bild nicht eindeutig ermittelbar ist.

Gemäß eines weiteren Aspekts der Erfindung weist ein System für ein Kraftfahrzeug die Vorrichtung auf, die zum Ausführen des Verfahrens ausgebildet ist. Das System weist ein Navigationsgerät und eine Ausgabevorrichtung zum Ausgeben von Navigationsanweisungen auf, die Informationen über eine bevorzugte Fahrspur umfassen.

Das Navigationsgerät ist beispielsweise ein satellitengestütztes Navigationsgerät, beispielsweise ein GPS-Navigationsgerät. Das Navigationsgerät umfasst Kartendaten, die zur Routenführung verwendet werden. In Abhängigkeit eines Starts und eines vorgegebenen Ziels für die Route werden somit Navigationsanweisungen ermittelt, die beispielsweise ein Abbiegen an einer Kreuzung umfassen.

Die Ausgabevorrichtung ist beispielsweise eine graphische Ausgabevorrichtung, insbesondere ein Display. Alternativ oder zusätzlich ist die Ausgabevorrichtung eine Audioausgabevorrichtung, die insbesondere Lautsprecher aufweist. Im Betrieb ist es für das System möglich sehr konkrete Navigationsanweisungen auszugeben. Dadurch, dass insbesondere die genaue Position des Kraftfahrzeugs sowie die vorhandenen Fahrspuren und ihre Topologie bekannt sind, ist eine genaue Navigationsanweisung für einen Spurenwechsel in Abhängigkeit von der eigenen Position möglich.

Weitere Vorteile, Merkmale und Weiterbildungen ergeben sich aus den nachfolgenden in Verbindung mit den Figuren erläuterten Beispielen.

Es zeigen:
- Figur 1: eine schematische Darstellung eines Kraftfahrzeugs gemäß Ausführungsformen, und
- Figuren 2 bis 8: verschiedene Verfahrensstadien gemäß Ausführungsformen.

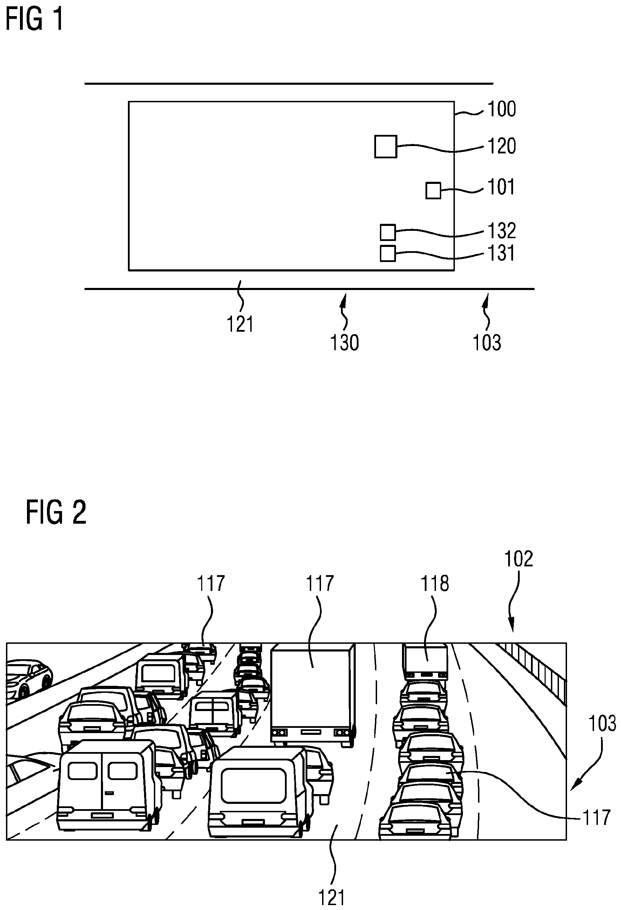

Figur 1 zeigt ein Kraftfahrzeug 100. Das Kraftfahrzeug 100 ist in einer Umgebung 103 auf einer Straße 121 unterwegs. Das Kraftfahrzeug weist eine Kamera 101 auf. Die Kamera 101 ist eingerichtet, ein Bild der Umgebung 103 aufzuzeichnen. Insbesondere ist die Kamera 101 eingerichtet, ein Videosignal der Umgebung 103 bereitzustellen. Die Kamera ist beispielsweise im Bereich des Rückspiegels an der Frontscheibe des Kraftfahrzeugs 100 angeordnet. Gemäß weiteren Ausführungsformen ist die Kamera auf dem Dach des Kraftfahrzeugs 101 angeordnet. Beispielsweise ist es möglich, die Kamera aus dem Dach des Kraftfahrzeugs herauszufahren, um eine bessere Perspektive zu erfassen. Gemäß weiteren Ausführungsformen sind mehrere Kameras 101 vorgesehen, deren Bilder verwendet werden. Die Kamera ist so ausgerichtet, dass sie die Umgebung 103 vor dem Kraftfahrzeug aufzeichnet. Das Kraftfahrzeug 100 weist eine Vorrichtung 120 auf, die die Bilder der Kamera auswertet. Gemäß Ausführungsformen ist die Kamera 101 Teil der Vorrichtung 120. Gemäß weiteren Ausführungsformen, die nicht Teil der Erfindung sind, sind die Kamera 101 und die Vorrichtung 120 separate Bauelemente. Beispielsweise ist die Vorrichtung 120 Teil einer Steuervorrichtung des Kraftfahrzeugs 100. Das Kraftfahrzeug 100 weist weiterhin ein Navigationsgerät 131 und eine Ausgabevorrichtung 132 auf. Das Navigationsgerät 131 ist mit der Vorrichtung 120 signaltechnisch gekoppelt oder Teil der Vorrichtung 120. Gemäß weiteren Ausführungsformen ist die Vorrichtung 120 Teil des Navigationsgeräts 131. Das Navigationsgerät 131, insbesondere ein Satellitennavigationssystem, ist eingerichtet, Navigationsanweisungen für einen Fahrer des Kraftfahrzeugs 100 zu ermitteln und mittels der Ausgabevorrichtung 132 auszugeben. Die Ausgabevorrichtung 132 ist insbesondere ein Bildschirm. Die Vorrichtung 120, das Navigationsgerät 131 und die Ausgabevorrichtung 132 sind Teil eines Systems 130. Gemäß weiteren Ausführungsformen ist die Kamera 101 ebenfalls Teil des Systems 130.

Figur 2 zeigt ein Bild 102 der Umgebung 103, das von der Kamera 101 aufgezeichnet ist. Das Bild 102 weist ein Abbild der Straße 121 vor dem Kraftfahrzeug 100 auf. Das Bild 102 umfasst eine Mehrzahl weiterer Kraftfahrzeuge 117 und 118.

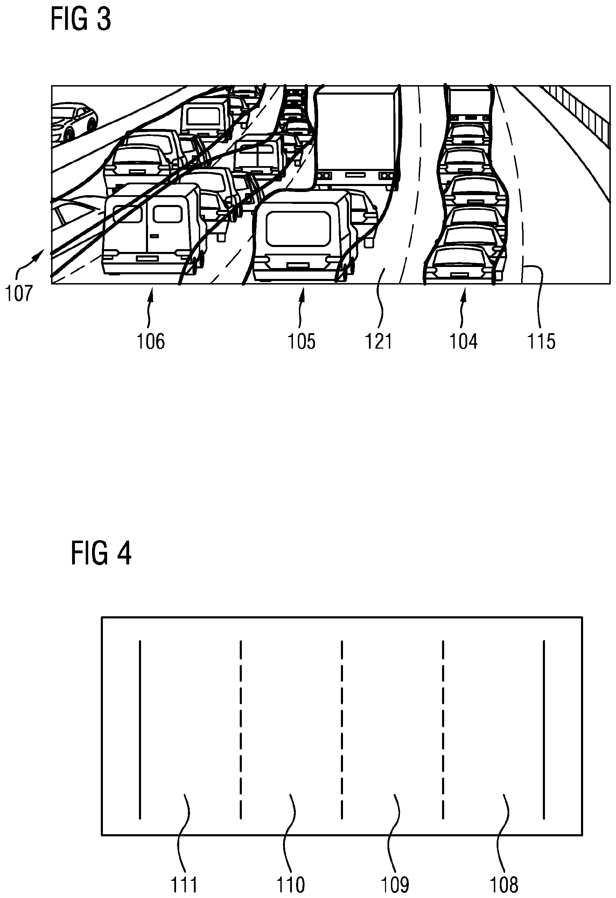

In dem Bild 102 wird eine Mustererkennung durchgeführt. Mittels der Mustererkennung werden Fahrzeugkolonnen 104, 105, 106 und 107 ermittelt (Figur 3). Die Fahrzeugkolonnen sind in der Figur 3 mittels der weißen Linien kenntlich gemacht. Hintereinander angereihte Fahrzeuge werden in dem Bild 102 erkannt und mittels der Mustererkennung als Fahrzeugkolonne 104 bis 107 ermittelt. Im dargestellten Ausführungsbeispiel werden vier Fahrzeugkolonnen ermittelt. Gemäß weiteren Ausführungsformen werden mehr als vier oder weniger als vier Fahrzeugkolonnen ermittelt abhängig davon, wie viele Fahrzeugkolonnen das Bild 102 abbildet.

Gemäß Ausführungsformen wird zusätzlich zu den Fahrzeugkolonnen 104 bis 107 eine Fahrbahnmarkierung 115 in dem Bild 102 ermittelt. Die Fahrbahnmarkierung 115 wird gemäß weiteren Ausführungsformen mittels eines separaten Systems ermittelt. Auf die Ermittlung der Fahrbahnmarkierung 115 wird gemäß Ausführungsformen verzichtet. Insbesondere bei dichtem Verkehr ist die Fahrbahnmarkierung 115 von den weiteren Kraftfahrzeugen 117 und 118 überdeckt. Die Ermittlung der Fahrzeugkolonnen 104 bis 107 ist unabhängig von der Ermittlung der Fahrbahnmarkierung 115 möglich.

Zur Ermittlung der Fahrzeugkolonnen 104 bis 107 wird insbesondere in einem Videosignal beispielsweise erkannt, welche Objekte sich bewegen und welche unbeweglich in der Umgebung 103 sind. Objekte die sich bewegen werden beispielsweise als Fahrzeuge 117, 118 erkannt während unbewegte Objekte beispielsweise Häuser oder Bäume sind.

Aus den ermittelten Fahrzeugkolonnen 104 bis 107 werden Fahrspuren 108, 109, 110 und 111 ermittelt (Figur 4) . Werden vier nebeneinander liegende Fahrzeugkolonnen 104 bis 107 ermittelt, wird auf vier nebeneinander liegende Fahrspuren 108 bis 111 geschätzt.

Auch eine Ermittlung einer Spurtopologie 114 ist möglich. Die Spurtopologie 114 umfasst insbesondere Informationen über die jeweilige Fahrtrichtung der Fahrspuren 108 bis 111. Die Fahrtrichtung der Fahrspuren 108 bis 111 ist beispielsweise jeweils eine Rechtsabbiegerspur, eine Geradeausspur oder eine Linksabbiegerspur. Auch eine kombinierte Geradeaus- und Abbiegespur ist möglich.

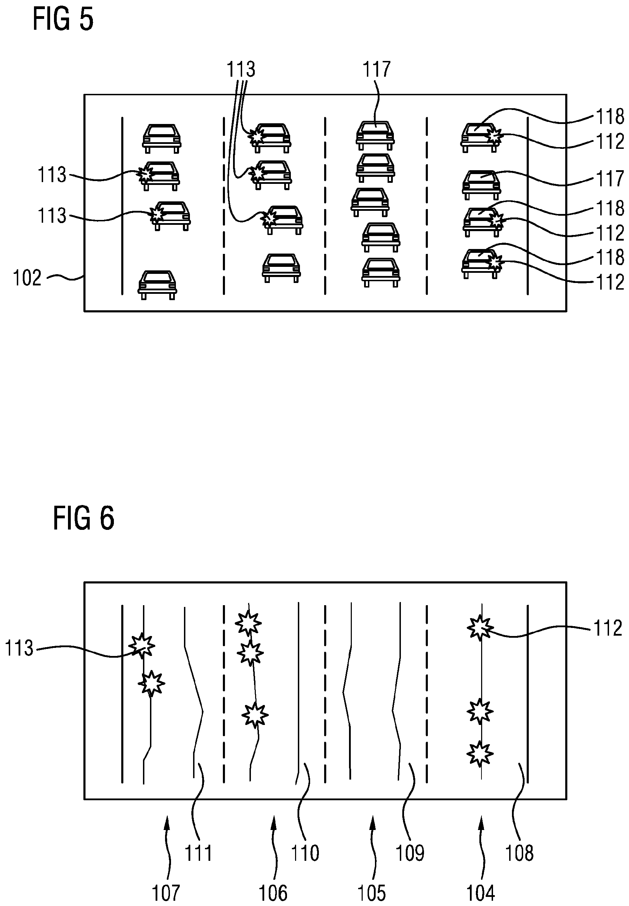

Zur Ermittlung der Spurtopologie 114 werden zusätzliche Merkmale aus der Kamerabildverarbeitung herangezogen. Insbesondere wird der Zustand von Fahrtrichtungsanzeigern 112, 113 ermittelt (Figur 4) . In dem Bild 102 wird die Blinkeraktivität der weiteren Kraftfahrzeuge 117, 118 ermittelt. Beispielsweise ist der Zustand der Fahrtrichtungsanzeiger 112 der weiteren Kraftfahrzeuge 118 in der Figur 5 ein Rechtsblinken. Der Zustand der Fahrtrichtungsanzeiger 113 ist ein Linksblinken. Die weiteren Kraftfahrzeuge 117 in der Figur 5 blinken nicht.

Figur 6 zeigt schematisch eine Überlagerung der Blinkermustererkennung mit der Fahrspurmustererkennung. Somit ist es möglich, zwischen rechtsblinkenden und linksblinkenden Fahrzeugen zu unterscheiden. In der Fahrzeugkolonne 104 wird erkannt, dass die Fahrtrichtungsanzeiger an der rechten Seite der Fahrzeugkolonne 104 blinken. Somit wird ein Rechtsblinken ermittelt. In den Fahrzeugkolonnen 106 und 107 wird erkannt, dass die Fahrtrichtungsanzeiger am linken Rand der jeweiligen Fahrzeugkolonne 106 und 107 blinken. Somit wird auf ein Linksblinken entschieden.

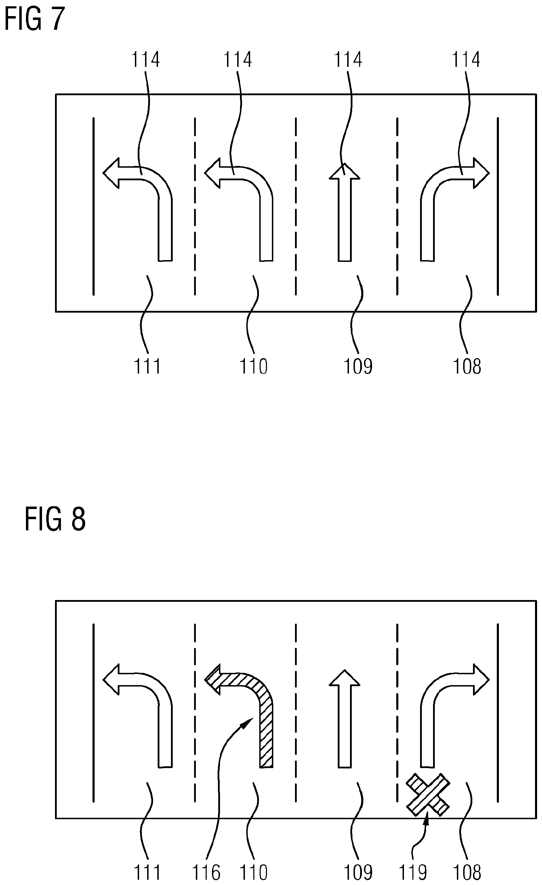

Aus der Ermittlung der Fahrtrichtungsanzeiger 112, 113 sowie den ermittelten Fahrspuren 108 bis 111 wird die Spurtopologie 114 abgeleitet (Figur 7) . Wird für einer Fahrspur 108 ermittelt, dass mindestens ein vorgegebener Anteil der Kraftfahrzeuge 117, 118 rechts blinkt, wird die Fahrspur als Rechtsabbiegerspur erkannt, im dargestellten Ausführungsbeispiel die Fahrspur 108. Wird für eine Fahrspur ermittelt, dass mindestens ein vorgegebener Anteil der weiteren Kraftfahrzeuge 117, 118 auf dieser Fahrspur links blinkt, wird diese Fahrspur als Linksabbiegerspur erkannt. Im dargestellten Ausführungsbeispiel sind dies die Spuren 110 und 111. Beispielsweise ist der vorgegebene Anteil der blinkenden Fahrzeuge 50 %. Mindestens die Hälfte der Kraftfahrzeuge 117, 118 auf einer Spur muss blinken, um diese Spur als Abbiegerspur zu ermitteln. Gemäß weiteren Ausführungsformen ist der Anteil 75 % oder mehr, insbesondere 80 % oder mehr. Wird für eine Fahrspur ermittelt, dass wenige oder keine Kraftfahrzeuge auf dieser Spur blinken, wird diese Spur als Geradeausspur ermittelt. Im dargestellten Ausführungsbeispiel ist dies die Fahrspur 109.

Mit Hilfe von Kamerainformationen der Kamera 101, beispielsweise über die Optik der Kamera 101, die relative Lage der Kamera 101 im Kraftfahrzeug 100 und/oder Kalibrierungsinformationen zur Kamera 101, ist es möglich eine eigene Position 119 des Kraftfahrzeugs 100 in der Umgebung 103, insbesondere auf der Straße 121 zu ermitteln. Aus dem Versatz im Bild 102 der Kamera 101 ist es möglich, die eigene Fahrzeugposition 119 zu ermitteln. Somit ist es möglich, zu ermitteln auf welcher der Fahrspuren 108 bis 111 sich das Kraftfahrzeug 100 aktuell befindet. Ist beispielsweise die Fahrzeugkolonne 104 auf der Fahrspur 108 als relativ gerade ermittelt und die Fahrzeugkolonnen 105, 106 und 107 auf den weiteren Fahrspuren 109, 110 und 111 schräg verlaufend, ist das Kraftfahrzeug 100 wahrscheinlich auf der Fahrspur 108. Die eigene Position 119 ist in Figur 9 exemplarisch durch ein Kreuz gekennzeichnet.

Für das Navigationsgerät 131 ist es möglich, mittels der Information über die eigene Position 119 sowie die ermittelten Fahrspuren 108 mit der Spurtopologie 114 eine präzise Navigationsanweisung 116 über die Ausgabevorrichtung 132 auszugeben. Beispielsweise wird auf der Ausgabevorrichtung 132 ein Bild der ermittelten Fahrspuren 108 bis 111 mit der Spurtopologie 114 dargestellt. Die bevorzugte Fahrspur, im dargestellten Ausführungsbeispiel die Fahrspur 110, ist dabei besonders hervorgehoben. Die bevorzugte Fahrspur wird insbesondere in Abhängigkeit der aktuellen Position 119 ermittelt. Liegen mehrere mögliche Fahrspuren 110, 111 vor, die mit der vorgegeben Route übereinstimmen, wird als bevorzugte Fahrspur die Fahrspur ausgewählt, die beispielsweise am einfachsten erreichbar ist. Im dargestellten Ausführungsbeispiel ist dies die Fahrspur 110, da diese ausgehend von der aktuellen Position 119 auf der Fahrspur 100 rechts am wenigstens Spurwechsel erfordert. Gemäß weiteren Ausführungsbeispielen wird die bevorzugte Fahrspur 110 alternativ oder zusätzlich an Hand von einem anderen Kriterium ermitteln, beispielweise einer nachfolgenden Navigationsanweisung.

Durch die Auswertung der Fahrzeugkolonnen 104 bis 107 ist es möglich die Fahrspuren 108 bis 111 und die Anzahl der Fahrspuren zu erkennen, insbesondere auch bei dichtem Verkehr, wenn die Fahrbahnmarkierung 115 verdeckt ist. Zudem ist es möglich die Fahrspuren 108 bis 111 für Navigationsanweisungen zu verwenden, auch wenn keine Daten aus einer Datenbank über die Fahrspuren im Navigationsgerät 131 vorhanden sind. Die Spurtopologie 114 wird anhand der Auswertung der Fahrtrichtungsanzeiger 112, 113 bestimmt. Die eigene Fahrzeugposition 119 wird auf dem erkannten Spurenmuster der Fahrspuren 108 bis 111 ermittelt. Die ermittelten Fahrspuren 108 bis 111 mit der Spurtopologie 114 und der ermittelten eigenen Position 119 wird mit der Routenführung der Navigation kombiniert. Dies vereinfacht den Spurwechsel und macht diesen präziser. Ein Fahrer, der auf der rechten Spur fährt, braucht nicht unbedingt von ganz rechts nach ganz links zu wechseln, wenn er nach links abbiegen muss. Im Falle der Verfügbarkeit einer zweiten oder dritten Linksabbiegerspur reicht es aus, auf die am nächsten liegende Abbiegespur zu wechseln. Eine mögliche präzise Darstellung für die Routenführung ist in Figur 8 dargestellt, in der die bevorzugte Fahrspur 110 grafisch hervorgerufen ist. Alternativ oder zusätzlich wird eine präzise Sprachausgabe durch die Ausgabevorrichtung 132 ausgegeben. Zum Beispiel wird statt der allgemeinen Aussage "weiter vorne links abbiegen" die präzise Navigationsanweisung "zwei Spurwechsel nach links und weiter vorne links abbiegen" ausgegeben. Somit ist es auch im Stadtverkehr und in Kreuzungsbereichen, in denen die Kraftfahrzeuge dicht hintereinander fahren, möglich, die Fahrspuren 104 bis 111 zu ermitteln und präzise Navigationsanweisungen auszugeben. Dadurch, dass stets die aktuelle Anzahl der Fahrspuren 108 bis 111 ermittelt wird und die aktuelle Spurtopologie 114 ermittelt wird, werden die Navigationsanweisungen aufgrund der aktuellen Umgebungssituation erstellt. Fehlerhafte Angaben aufgrund von veralteten Informationen werden so vermieden.

## Patentansprüche

1. Verfahren für ein Kraftfahrzeug (100) mit einer Kamera (101), umfassend:
- Bereitstellen eines Bilds (102) der Kamera (101), das eine Umgebung (103) des Kraftfahrzeugs (100) abbildet
**gekennzeichnet durch**
- Ermitteln mindestens einer Fahrzeugkolonne (104) in dem Bild,
- Ermitteln mindestens einer Fahrspur (108) in Abhängigkeit von der ermittelten mindestens einen Fahrzeugkolonne (104),
- Ermitteln eines Zustands von Fahrtrichtungsanzeigern (112) in der mindestens einen Fahrzeugkolonne (104) in dem Bild (102),
- Ermitteln einer Spurtopologie (114), die Informationen über eine Fahrtrichtung der mindestens einen Fahrspur (108) als Rechtsabbiegespur, Geradeausspur oder Linksabbiegespur umfasst, für die ermittelte mindestens eine Fahrspur (108) in Abhängigkeit von dem Zustand der Fahrtrichtungsanzeiger (112) in der mindestens einen Fahrzeugkolonne (104).

2. Verfahren nach Anspruch 1, umfassend:
- Bereitstellen einer Kamerainformation der Kamera (101),
- Ermitteln einer Position (119) des Kraftfahrzeugs (100) relativ zu der mindestens einen ermittelten Fahrspur (108) in Abhängigkeit von der Kamerainformation.

3. Verfahren nach Anspruch 1 oder 2, umfassend:
- Ermitteln einer angezeigten Richtung der Fahrtrichtungsanzeiger (112) in der mindestens einen Fahrzeugkolonne (104) in Abhängigkeit von der mindestens einen ermittelten Fahrzeugkolonne (104), wenn ein aktiver Zustand eines Fahrtrichtungsanzeigers (112) in dem Bild (102) ermittelt wurde.

4. Verfahren nach einem der Ansprüche 1 bis 3, umfassend:
- Bereitstellen einer Soll-Spurtopologie aus einer Datenbank,
- Ermitteln der Spurtopologie in Abhängigkeit von der Soll-Spurtopologie.

5. Verfahren nach einem der Ansprüche 1 bis 4, umfassend:
- Ermitteln einer Lage einer Fahrbahnmarkierung (115) in der Umgebung,
- Ermitteln der mindestens einen Fahrspur (108) in Abhängigkeit von der Lage der Fahrbahnmarkierung (115) .

6. Verfahren nach einem der Ansprüche 1 bis 5, umfassend:
- Bereitstellen einer Routeninformation einer geplanten Route für das Kraftfahrzeug (100),
- Ermitteln einer bevorzugten Fahrspur (106) für das Kraftfahrzeug (100) in Abhängigkeit von der Routeninformation und in Abhängigkeit der ermittelten Spurtopologie (114).

7. Verfahren nach Anspruch 2 und Anspruch 6, umfassend:
- Ausgabe von Navigationsanweisungen in Abhängigkeit der ermittelten Position des Kraftfahrzeugs (100) und in Abhängigkeit der bevorzugten Fahrspur (110).

8. Vorrichtung für ein Kraftfahrzeug (100), umfassend:
- Kamera (101), die ausgebildet ist ein Bild (102) bereitzustellen, das eine Umgebung (103) des Kraftfahrzeugs (100) abbildet;
- Verarbeitungseinheit, die ausgebildet ist:
- mindestens eine Fahrzeugkolonne (104) in dem Bild zuermitteln
- mindestens eine Fahrspur (108) zu ermitteln in Abhängigkeit von der ermittelten mindestens einen Fahrzeugkolonne (104);
- einen Zustand von Fahrtrichtungsanzeigern (112) in der mindestens einen Fahrzeugkolonne (104) in dem Bild (102) zu ermitteln;
- eine Spurtopologie (114) zu ermitteln, die Informationen über eine Fahrtrichtung der mindestens einen Fahrspur (108) als Rechtsabbiegespur, Geradeausspur oder Linksabbiegespur umfasst, für die ermittelte mindestens eine Fahrspur (108) in Abhängigkeit von dem Zustand der Fahrtrichtungsanzeiger (112) in der mindestens einen Fahrzeugkolonne (104).

9. System für ein Kraftfahrzeug (100), aufweisend:
- eine Vorrichtung (120) nach Anspruch 8,
- ein Navigationsgerät (131),
- eine Ausgabevorrichtung (132) zum Ausgeben von Navigationsanweisungen, die Informationen über eine bevorzugte Fahrspur (110) umfassen.

## Claims

1. Method for a motor vehicle (100) with a camera (101), comprising:
- providing an image (102) from the camera (101), said image imaging the surroundings (103) of the motor vehicle (100), **characterized by**
- ascertaining at least one line of vehicles (104) in the image,
- ascertaining at least one driving lane (108) in dependence on the ascertained at least one line of vehicles (104),
- ascertaining a state of driving direction indicators (112) in the at least one line of vehicles (104) in the image (102),
- ascertaining a lane topology (114) comprising information relating to a driving direction of the at least one driving lane (108) as a lane for turning right, a lane for driving straight ahead or a lane for turning left, for the ascertained at least one driving lane (108), in dependence on the state of the driving direction indicators (112) in the at least one line of vehicles (104).

2. Method according to Claim 1, comprising:
- providing an item of camera information of the camera (101) ,
- ascertaining a position (119) of the motor vehicle (100) relative to the at least one ascertained driving lane (108) in dependence on the camera information.

3. Method according to Claim 1 or 2, comprising:
- ascertaining an indicated direction of the driving direction indicators (112) in the at least one line of vehicles (104) in dependence on the at least one ascertained line of vehicles (104), if an active state of a driving direction indicator (112) has been ascertained in the image (102).

4. Method according to one of Claims 1 to 3, comprising:
- providing a prespecified lane topology from a database,
- ascertaining the lane topology in dependence on the prespecified lane topology.

5. Method according to one of Claims 1 to 4, comprising:
- ascertaining a location of a lane marking (115) in the surroundings,
- ascertaining the at least one driving lane (108) in dependence on the location of the lane marking (115).

6. Method according to one of Claims 1 to 5, comprising:
- providing an item of route information of a planned route for the motor vehicle (100),
- ascertaining a preferred driving lane (106) for the motor vehicle (100) in dependence on the route information and in dependence on the ascertained lane topology (114).

7. Method according to Claim 2 and Claim 6, comprising:
- outputting navigation instructions in dependence on the ascertained position of the motor vehicle (100) and in dependence on the preferred driving lane (110).

8. Apparatus for a motor vehicle (100), comprising:
- a camera (101), configured for providing an image (102), said image imaging the surroundings (103) of the motor vehicle (100) ;
- a processing unit, configured for:
- ascertaining at least one line of vehicles (104) in the image;
- ascertaining at least one driving lane (108) in dependence on the ascertained at least one line of vehicles (104);
- ascertaining a state of driving direction indicators (112) in the at least one line of vehicles (104) in the image (102);
- ascertaining a lane topology (114) comprising information relating to a driving direction of the at least one driving lane (108) as a lane for turning right, a lane for driving straight ahead or a lane for turning left, for the ascertained at least one driving lane (108), in dependence on the state of the driving direction indicators (112) in the at least one line of vehicles (104) .

9. System for a motor vehicle (100), including:
- an apparatus (120) according to Claim 8,
- a navigation device (131),
- an output apparatus (132) for outputting navigation instructions that comprise information relating to a preferred driving lane (110).

## Revendications

1. Procédé destiné à un véhicule automobile (100) muni d'une caméra (101), le procédé comprenant les étapes suivantes :
- fournir une image (102) de la caméra (101) qui reproduit un environnement (103) du véhicule automobile (100), **caractérisé par** les étapes suivantes
- déterminer au moins une colonne de véhicules (104) dans l'image,
- déterminer au moins une voie de roulement (108) en fonction de l'au moins une colonne de véhicules déterminée (104) ,
- déterminer un état d'indicateurs de sens de roulement (112) dans l'au moins une colonne de véhicules (104) dans l'image (102),
- déterminer une topologie de voie (114) qui comprend des informations sur un sens de roulement de l'au moins une voie de roulement (108) comme voie de virage à droite, voie rectiligne ou voie de virage à gauche, pour l'au moins une voie de roulement déterminée (108), en fonction de l'état des indicateurs de sens de roulement (112) dans l'au moins une colonne de véhicules (104).

2. Procédé selon la revendication 1, comprenant les étapes suivantes :
- fournir une information de la caméra (101),
- déterminer une position (119) du véhicule automobile (100) par rapport à l'au moins une voie de roulement déterminée (108) en fonction de l'information de caméra.

3. Procédé selon la revendication 1 ou 2, comprenant les étapes suivantes :
- déterminer un sens indiqué des indicateurs de sens de roulement (112) dans l'au moins une colonne de véhicules (104) en fonction de l'au moins une colonne de véhicules déterminée (104) lorsqu'un état actif d'un indicateur de sens de roulement (112) a été déterminé dans l'image (102).

4. Procédé selon l'une des revendications 1 à 3, comprenant les étapes suivantes :
- fournir une topologie de voie de consigne à partir d'une base de données,
- déterminer la topologie de voie en fonction de la topologie de voie de consigne.

5. Procédé selon l'une des revendications 1 à 4, comprenant les étapes suivantes :
- déterminer une position d'un marquage de chaussée (115) dans l'environnement,
- déterminer l'au moins une voie de roulement (108) en fonction de la position du marquage de chaussée (115).

6. Procédé selon l'une des revendications 1 à 5, comprenant les étapes suivantes :
- fournir une information d'itinéraire d'un itinéraire planifié pour le véhicule automobile (100),
- déterminer une voie de roulement préférée (106) pour le véhicule automobile (100) en fonction de l'information d'itinéraire et en fonction de la topologie de voie déterminée (114) .

7. Procédé selon la revendication 2 et la revendication 6 comprenant l'étape suivante :
- délivrer des instructions de navigation en fonction de la position déterminée du véhicule automobile (100) et en fonction de la voie de roulement préférée (110).

8. Dispositif destiné à un véhicule automobile (100), le dispositif comprenant :
- une caméra (101) qui est conçue pour fournir une image (102) qui reproduit l'environnement (103) du véhicule automobile (100) ;
- une unité de traitement conçue :
- pour déterminer au moins une colonne de véhicules (104) dans l'image ;
- pour déterminer au moins une voie de roulement (108) en fonction de l'au moins une colonne de véhicules déterminée (104) ;
- pour déterminer un état d'indicateurs de sens de roulement (112) dans l'au moins une colonne de véhicules (104) dans l'image (102) ;
- pour déterminer une topologie de voie (114) qui comprend des informations sur un sens de roulement de l'au moins une voie de roulement (108) comme voie de virage à droite, voie rectiligne ou voie de virage à gauche, pour l'au moins une voie de roulement déterminée (108) en fonction de l'état des indicateurs de sens de roulement (112) dans l'au moins une colonne de véhicule (104).

9. Système destiné à un véhicule automobile (100), le système comprenant :
- un dispositif (120) selon la revendication 8,
- un appareil de navigation (131),
- un dispositif de délivrance (132) destiné à délivrer des instructions de navigation qui comprennent des informations sur une voie de roulement préférée (110).
